# EUROPEAN PATENT APPLICATION

(11) **EP 4 506 320 A1**
(43) Date of publication of application: **12.02.2025**
(21) Application number: 23190186.9
(22) Date of filing: 08.08.2023
(51) Int. Cl.: C04B 28/04, C04B 14/48, C04B 16/06, C04B 111/34

(54) **COMPOSITION AND METHOD FOR THE PRODUCTION OF HYBRID FIBRE-REINFORCED CONCRETE**

(71) Applicant: Mapei S.p.A., 20158 Milano (IT)
(72) Inventor: The designation of the inventor has not yet been filed
(74) Representative: Bianchetti & Minoja with Trevisan & Cuonzo IPS SRL

(57) **Abstract**

The present invention concerns fibre reinforced concrete comprising cement, water and a combination of metallic fibres and macrosynthetic fibres. The combination of metallic fibres and macrosynthetic fibres secure synergistic effects improving residual tensile strength (fr) and the resistant bending capacity in comparison to conventional reinforced concrete with either metallic or macrosynthetic fibres.

## Description

The present invention concerns fibre reinforced concrete comprising cement, water and a combination of metallic fibres and macrosynthetic fibres.

### Background of the invention

The invention relates to the composition of fibre reinforced concrete for the production of floor slabs, using an hybrid solution characterized by the use of two different type of structural fibres in concrete.

Fibre reinforced concrete (FRC) is widely used in various construction applications due to its enhanced mechanical properties and improved resistance to cracking. By adding fibres to the concrete mix, FRC significantly enhances the mechanical properties conferring residual tensile strength after the concrete first cracking. The fibres distribute the tensile stresses more effectively, reducing the cracks widths by a bridging effect thus improving the overall structural integrity. The fibres act as diffuse reinforcement, bridging the cracks and preventing them from widening. This crack control ability is especially valuable in reducing the risk of structural failure and improving the durability of concrete elements.

Moreover, FRC provides additional benefits such as improved Impact Resistance due to the fibres absorbing energy and distributing it more uniformly throughout the concrete; Enhanced Durability against freeze-thaw cycles, chemical attacks, and abrasion; Reduced construction time and labour compared to traditional steel reinforced concrete. FRC can eliminate or reduce the need for traditional reinforcement methods, such as steel rebar placement, resulting in reduced construction time and labour costs. This benefit is especially relevant for projects with complex shapes or difficult access areas. Enhanced flexural strength making it suitable for applications that require resistance to bending or flexing forces. Generally, FRC offers greater design flexibility, as fibres can be tailored to meet specific project requirements. Different types of fibres (such as steel, synthetic, or hybrid) and varying fibre lengths and proportions can be employed to optimize the concrete's performance characteristics.

In particular, in the last few years FRC has been increasingly used for the production of floor slabs due to its intrinsic characteristics of ease of placing, stability, pumpability and rheology.

To date, there are numerous applications of FRC for the construction of industrial flooring thanks also to the presence of specific calculation codes for this type of element. Commonly used FRCs are characterized by metallic fibres only. In recent years macrosynthetic structural fibres have also been used.

For example, the interaction in FRC between fibres and the concrete matrix is described in several technical standards (i.e. Model Code 2010; CNR DT 204; RILEM TC 162 TDF) as well as the procedure test for the evaluation of the mechanical performance in terms of residual tensile strength (UNI EN 14651).

In all these technical standards, different values of residual tensile strength (fᵣ) are defined varying the crack mouth open displacement (CMOD). In Service Limit State (SLS), where a control of the serviceability of the FRC element is required, the primary value is fr1 that is the residual tensile strength evaluated for CMOD₁ value equal of 0.5 mm, while at the Ultimate Limit State (ULS), the main value is the fr3 or fr4 (CMOD₃=2.5 mm; CMOD₄=3.5 mm) for the calculation of the resistant bending capacity of the FRC element.

It is accordingly evident that high values of fr1 and fr3 improve the properties of the FRC in terms of durability and resistant capacity.

All the standards are referred to FRC concrete made using only one type of fibre (usually either macrosynthetic or metallic).

Each of the FRC types is characterized by a well-defined behaviour in terms of ductility and residual strength. Steel fibres allow to obtain high performances in fr1 thanks to their greater intrinsic stiffness. Macrosynthetic fibres, on the other hand, give higher residual stress values in fr3 and fr4 thanks to the greater deformability of the material. The common dosages of steel fibres used in the FRC for flooring applications are between 20 and 35 kg/m³ whereas the dosages of macrosynthetic fibres are between 3 and 6 kg/m³.

Traditional FRC typically incorporates either metallic fibres or macrosynthetic fibres to enhance its tensile strength and durability. However, each type of fibre has its limitations, and there is a need for an innovative approach that combines the advantages of both metallic and macrosynthetic fibres.

### Description of the invention

It has now been found that the combination of two different types of structural fibres (macro synthetic and metallic) in the production of fibre reinforced concrete (FRC) allows to obtain fr1 and fr3 values higher than those of FRC made using only one fibre type (macro synthetic or metallic) at the same total fibre volume. The combination of macrosynthetic and metallic fibres provides therefore a synergistic effect, optimizing the mechanical properties and performance of fibre reinforced concrete.

The fibre reinforced concrete according to the invention, hereinafter also referred to as hybrid fibre reinforced concrete (HyFRC), exhibits improved mechanical strength, crack resistance, and durability in comparison to traditional FRC made with either metallic or macrosynthetic fibres. This invention has significant applications in the construction industry and offers a versatile and cost-effective solution for reinforced concrete structures.

The fibre reinforced concrete cement of the invention comprises cement, water, a superplasticizer, a sand-stone mixture, metallic fibres and macrosynthetic fibres.

Cement is typically a CEMI, CEMII, CEMIII, CEM IV type cement containing at least 75% of clinker.

Metallic fibres are thin (diameter: 0.5 - 1 mm), elongated (length: 30 - 60 mm) metallic elements. Suitable metallic fibres include steel fibres, stainless steel fibres, brass fibres or other suitable metallic alloys. The metallic fibres may have various shapes, such as hooked, double hooked, crimped, straight, or any other suitable configuration that promotes improved bonding with the concrete matrix.

Macrosynthetic fibres are polymeric fibres with a high aspect ratio, typically greater than 20:1. Suitable macrosynthetic fibres include polypropylene fibres, polyethylene fibres, polyester fibres, polyamide fibres or other suitable synthetic fibres.

The macrosynthetic fibres may have different length and diameter, typically a diameter of 0.5 - 1.0 mm and length of 20 - 65 mm, depending on the desired application and performance requirements. Macrosynthetic fibres may have different different shapes such as waved, embossed, twisted, flat or any other suitable configuration that promotes improved bonding with the concrete matrix.

The dosage of macrosynthetic fibres by weight on the unit volume may range from 1 to 12 kg/m³, preferably from 2 to 8 kg/m³, more preferably from 2,5 to 6 kg/m³.

The dosage of metallic fibres by weight on the unit volume may range from 5 to 35 kg/m³, preferably from 7 to 20 kg/m³, more preferably from 8 to 15 kg/m³.

The ratio of metallic fibres to macrosynthetic fibres may vary depending on factors such as the desired ductility index, flexural strength, impact resistance, or other specific project requirements. According to the invention, the weight ratio of macrosynthetic and metallic fibres may vary between 0,03 and 2, preferably between 0,15 and 0,7, more preferably between 0,30 and 0,50, while the volume ratio may vary between 0,23 and 15, preferably between 1,1 and 5.5, more preferably between 2,3 and 4.

Any superplasticizer may be used according to the invention. Preferred superplasticizers are selected from HRWR (High-Range Water Reducers) agents such as disclosed in EP 612702. Examples of suitable HRWR agents include the acrylic type superplasticizers sold under the trade-names Dynamon Floor ^{®}, (e.g. Dynamon Floor 15, Dynamon Floor 23, Dynamon Floor 25).

Shrinkage reducing agent, specifically glycols, and non-metallic expansive agents may also be added to the to the fibre reinforced concrete of the invention, preferably in amounts from 3 to 15 kg /m³ for glycols and from 10 to 40 kg/m³ for non-metallic expansive agents.

By way of exemplification, hybrid fibre reinforced concrete according to the invention has the following composition:
- cement: 270-550 kg/m³, preferably 350- 440 kg/m³;
- water: 100-215 kg/m³, preferably 150 - 190 kg/m³;
- sand-stone mixture with particle size up to 30 mm: 1600-1900 kg/m³ ;
- HRWR (superplasticizer): 0.5-2% of the cement weight;
- metallic fibres: 5-35 kg/m³, preferably 8-15 kg/m³;
- macrosynthetic fibres: 1 - 10 kg/m³, preferably 2.5 - 6 kg/m³.

The hybrid FRC of the invention is prepared by combining cementitious materials, aggregates, water and other specific additives. The aggregates percentages are defined using a proportional curve which allows to optimize the aggregates distribution and to obtain the best ratio between fibres and fine particles amount (sand + cement). The metallic and macrosynthetic fibres are uniformly dispersed throughout the concrete matrix during the mixing process.

The benefits obtained from the use of hybrid FRC in the field of industrial flooring compared to common FRC made with a single type of reinforcing fibre are listed below:
- better overall ductility deriving from an equivalence of performances in terms of residual stresses in fr1 (SLS) fr3 and fr4 (ULS).
- the presence of two types of fibres allows the establishment of a bridging effect both in the plastic state (plastic shrinkage) and in the hardened state (drying shrinkage: medium and macro-crack bridging).
- greater ease of application (pumpability, spreading) with the same performance (residual stresses).
- reduced balling effect with the same mechanical performance due to a smaller quantity of fibres used.
- fewer fibres floating and consequently easier and better surface finish of the flooring.

HyFRC is particularly suitable in combination with shrinkage-compensated concrete technology for the production of "jointless floors" where the surface without contraction joints is typically larger than 1000 m² concrete matrix during the mixing process.

The invention is further detailed in the following examples.

### Examples

Four different HyFRC mixtures were investigated by varying the ratio between macrosynthetic and steel fibres (Table 1).

| Component | Ex. 1 | Ex.2 | Ex.3 | Ex.4 |
|---|---|---|---|---|
| | Dosage | | | |
| Cement | 380 kg/m³ | 380 kg/m³ | 380 kg/m³ | 380 kg/m³ |
| Aggregates with particle size up to 20 mm | 1661 kg/m³ | 1661 kg/m³ | 1661 kg/m³ | 1661 kg/m³ |
| Water | 180 kg/m³ | 180 kg/m³ | 180 kg/m³ | 180 kg/m³ |
| Dynamon Floor (HRWR ) | 2.75 | 2.75 | 2.75 | 2.75 |
| Mapefibre ST40 plus Macrosynthetic Fibres | 2.5 kg/m³ | 2.7 kg/m³ | 2.7 kg/m³ | 2.5 kg/m³ |
| Mapefibre Steel 60/1M Metallic fibres | 9 kg/m³ | 9 kg/m³ | 12 kg/m³ | 10 kg/m³ |

The beam specimens were tested in bending after 28 days from casting according to EN 14651.

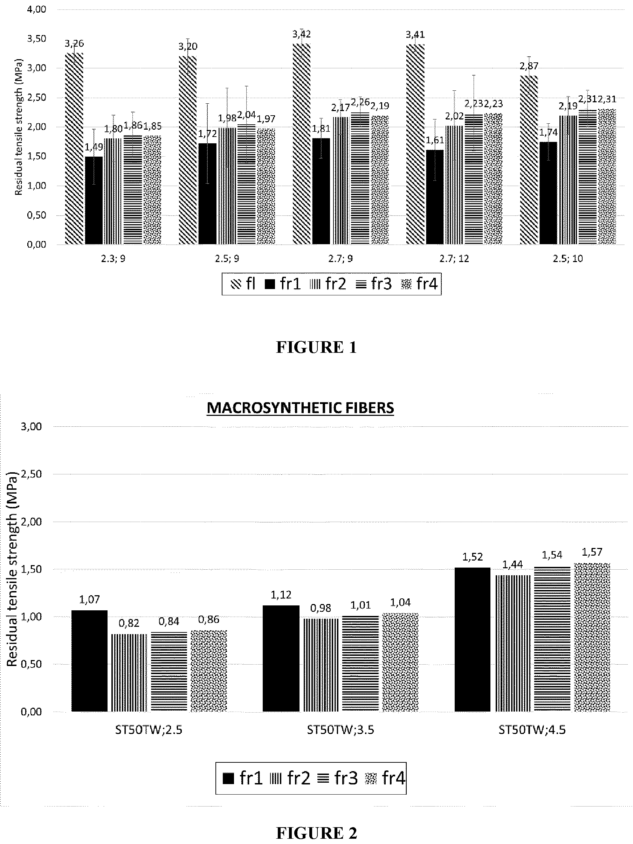

**Figure 1** shows the average values of residual tensile strength evaluated at the limit of proportionality (fL), CMOD1=0.5 mm (fr1), CMOD2=1.5 mm (fr2) to CMOD3=2.5 mm (fr3), CMOD4=3.5 mm (fr4), for the different concrete class and fibre dosages (macro synthetic fibres / metallic fibres).

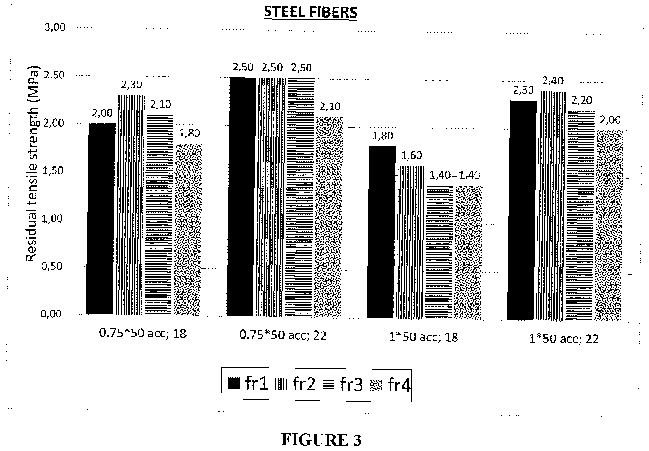

The synergetic effect between macro synthetic and steel fibres was evaluated comparing the results with those measured on FRC specimens with the same C30/37 concrete class but made using only macro synthetic or metallic fibres (**Figures 2****,** **3**).

The obtained results have shown:
1. For the same class of concrete (C30/37), the HyFRC mixes show the best performance. The synergy between metallic and macro synthetic fibres is demonstrated by the higher values of fr1 compared to macro synthetic FRC (**fig. 2**) and in terms of fr3 and fr4 compared to steel FRC (**fig. 3**).
2. The HyFRC of Ex 4 10 kg/m³ of metallic fibres plus 2,5 kg/m³ of macrosynthetic fibres provides results comparable or better than those obtained with FRC with only 18 kg/m^{f} steel fibres (fig. 1 v fig. 3).
3. Synergy between macro synthetic and metallic fibres allows an improvement in performance in terms of residual stress.

## Claims

1. A fibre reinforced concrete comprising cement, water, a superplasticizer, a sand-stone mixture, metallic fibres and macrosynthetic fibres.

2. A fibre reinforced concrete according to claim 1 wherein the cement is a CEMI, CEMII, CEMIII, CEM IV cement containing at least 75% of clinker.

3. A fibre reinforced concrete according to claim 1 or 2 wherein the weight ratio of macrosynthetic and metallic fibres may vary between 0,03 and 2, preferably between 0,15 and 0,7, more preferably between 0,30 and 0,50, while the volume ratio may vary between 0,23 and 15, preferably between 1,1 and 5.5, more preferably between 2,3 and 4.

4. A fibre reinforced concrete according to any one of claims 1-3 wherein the macrosynthetic fibres have a diameter of 0.5 - 1.0 mm and length of 20 - 65 mm.

5. A fibre reinforced concrete according to any one of claims 1-4 wherein the metallic fibres have a diameter of 0.5-1 mm and length of 30-60 mm.

6. A fibre reinforced concrete according to any one of claims 1-5 wherein the superplasticizers are acrylic type HRWR superplasticizers.

7. A fibre reinforced concrete according to any one of claims 1-6 further comprising a shrinkage reducing agent selected in the group of glycols.

8. A fibre reinforced concrete according to any one of claims 1-7 comprising a non-metallic expansive agent.

9. A fibre reinforced concrete according to any one of claims 1-8 having the following composition:
- cement:270-550 kg/m³;
- water: 100-215 kg/m³;
- sand-stone mixture with particle size up to 30 mm: 1600 -1900 kg/m³ ;
- HRWR (superplasticizer): 0.5-2% of the cement weight;
- metallic fibres: 5-35 kg/m³:
- macrosynthetic fibres: 2,5 - 7 kg/m³.

10. A fibre reinforced concrete according to claim 9 further comprising from 3 to 15 kg /m³ of glycols.

11. A fibre reinforced concrete according to claim 9 further comprising 10 - 40 kg/m³ of a non-metallic expansive agent.
